# EUROPÄISCHE PATENTSCHRIFT

(11) **EP 2 182 232 B1**
(45) Veröffentlichungstag und Bekanntmachung des Hinweises auf die Patenterteilung: **31.07.2013**
(21) Anmeldenummer: 09174113.2
(22) Anmeldetag: 27.10.2009
(51) Int. Cl.: F16C 33/64, F16C 29/06, F16C 29/00, B21K 1/04, B21J 9/02

(54) **Linearkugellager und Tragbahnelement dafür sowie Herstellverfahren und Umformvorrichtung für einen Rohling des Tragbahnelementes**
Linear ball bearing, load carrying element therefor, production method and forming device for a blank of the load carrying element
Roulement à billes linéaire et élément de support de charge correspondant, ainsi que procédé de fabrication et dispositif de formage pour une ébauche d'un élément de support de charge

(30) Priorität: 30.10.2008 DE 102008053933
(43) Veröffentlichungstag der Anmeldung: 05.05.2010
(73) Patentinhaber: Schaeffler Technologies AG & Co. KG, 91074 Herzogenaurach (DE)
(72) Erfinder: Kleber, Rainer, 66386, St. Ingbert (DE); Winkler, Thomas, 66280, Sulzbach/Neuweiler (DE); Rudy, Dietmar, 66501, Kleinbundenbach (DE); Neufang, Lothar, 66914, Waldmohr (DE); Lutz, Peter, 66879, Kottweiler-Schwanden (DE); Kania, Anna, 66424, Homburg (DE); Schmidt, Matthias, 66540, Neunkirchen (DE)

(56) Entgegenhaltungen:
- EP-A2- 1 921 332
- DE-A1- 1 949 182
- DE-A1- 2 831 148
- DE-A1- 4 210 039
- US-A- 3 512 849
- US-A- 3 900 233
- US-A- 4 082 374
- US-A- 5 829 882

## Beschreibung

### Gebiet der Erfindung

Die Erfindung betrifft ein Linearkugellager zur längsverschieblichen Lagerung einer wellenförmige Führungsschiene in einem die Führungsschiene umgebenden Teil, mit einem hülsenartigen Käfig, welcher in Umfangsrichtung hintereinander angeordnete Ausnehmungen aufweist, in denen Kugelumläufe gehalten sind, wobei jeder Kugelumlauf wenigstens einen Tragabschnitt mit an der Führungsschiene abrollbar abgestützten tragenden Kugeln aufweist, wobei die tragenden Kugeln eines Kugelumlaufs zusätzlich an einer Laufbahn eines in den Käfig mittel- oder unmittelbar eingesetzten Tragbahnelementes abrollbar abgestützt sind, welches wenigstens eine radiale, zumindest in einer Richtung nach außen gewölbte Außenfläche zur Anlage an eine Innenfläche des die Führungsschiene umgebenden Teils aufweist.

### Hintergrund der Erfindung

Derartige Linearkugellager sind zur Lagerung hin- und her beweglicher Maschinenteile bekannt. Dies können beispielsweise eine Antriebsspindel und ein Lagergehäuse einer Werkzeugmaschine sein. Die Linearkugellager haben die Aufgabe, in Bewegungsrichtung eine reibungsarme Lagerung sicherzustellen. Um zumindest auch bei kleineren auftretenden Fluchtungsfehlern zwischen den gegeneinander bewegten Teilen eine einwandfreie Funktion zu gewährleisten, weisen bei speziellen Bauformen die Tragbahnelemente der Linearkugellager eine Balligkeit auf, also wenigstens eine radiale, zumindest in einer Richtung nach außen gewölbte bzw. erhabene Außenfläche zur Anlage an eine Innenfläche des die Führungsschiene umgebenden Teils. Dadurch können sich die Tragbahnelemente kippend auf der Anlagefläche des die Führungsschiene umgebenden Teils bewegen und Fluchtungsfehler sind so weitgehend ausgleichbar.

Die Herstellung der Balligkeit der Tragbahnelemente ist vergleichsweise kostenintensiv. Diese wird in der Regel durch ein Biegen der Tragbahnelemente in der gewünschten Richtung erzeugt. Aufgrund der erfolgten Biegung müssen die der balligen Außenfläche gegenüberliegenden Laufbahnen des Tragbahnelementes zur Erzielung der gewünschten Laufbahngüte anschließend geschliffen werden. Mitunter ist auch noch ein Härten der Tragbahnelemente vorgesehen.

Das Dokument DE 42 10 039 A1 offenbart ein Linearkugellager mit einer entlang Führungsschiene bewegbaren kugelumlaufeinheit. Diese weist Tragbahnelemente auf deren Außenfläche mit einer Wölbung versehen sind.

Aus der WO 01/11251 A1 (DE 199 37 278 A1) ist ein gattungsgemäßes Linearkugellager bekannt. Dieses weist Tragbahnelemente auf, die eine in zwei Richtungen nach außen gewölbte Außenfläche haben und damit sehr gut auf der Bohrungsinnenfläche eines das Linearkugellager umgebenden Maschinengehäuses in Schwenkbewegungen abrollen können. Die Tragbahnelemente sind zudem in gehäuseartigen Aufnahmeteilen gehalten, die ihrerseits in Ausnehmungen eines hülsenartigen Käfigs in radialer Richtung einsetzbar und herausnehmbar angeordnet sind.

In der DE 39 10 469 A1 ist ein Linearkugellager beschrieben, bei dem in Ausnehmungen eines Käfigs ebenfalls Tragbahnelemente eingesetzt sind. Die zur schaukelnden Anlage an eine Innenumfangsfläche einer den Käfig aufnehmenden Lagergehäusebohrung bestimmten Außenfläche der Tragbahnelemente fällt von einem im Bereich ihrer Schaukelachse gelegenen Mittelbereich zu den Enden der Tragbahnelemente hin bezüglich der Käfigachse radial einwärts ab.

Auch aus der DE 1 949 182 A1 ist ein Linearkugellager bekannt, bei dem Tragbahnelemente in Ausnehmungen eines Käfigs eingesetzt sind, welche in ihrer Längsrichtung von der Mitte zu den Enden hin abgeschrägt sind. Der mittlere Teil der Tragbahnelemente bildet eine Drehachse und ermöglicht somit eine Kippbewegung, wodurch Winkelfehler zwischen den gegeneinander bewegten Teilen ausgeglichen werden können.

Die DE 199 54 387 A1 beschreibt ebenfalls ein Linearkugellager zur Lagerung einer Welle mit Tragbahnelementen, deren radiale Außenflächen gewölbt ausgeführt sind, so dass sich die Tragbahnelemente durch Verkippen auf Maßtoleranzen der Welle einstellen können.

Schließlich sei noch die US 5,558,442 erwähnt, welche ein Linearkugellager mit Tragbahnelementen beschreibt, die in ihrer Längserstreckung gesehen in ihrem mittleren Bereich eine in ihrer Längsrichtung gewölbte radiale Außenfläche aufweisen, wobei sich die Wölbung über die gesamte Breite der Tragbahnelemente erstreckt.

Die Erfindung betrifft ferner auch ein Tragbahnelement zur Verwendung in einem Linearkugellager und ein Verfahren zur Herstellung eines solchen Tragbahnelementes sowie eine Prägevorrichtung zur Herstellung des Tragbahnelementes.

### Aufgabe der Erfindung

Der Erfindung liegt die Aufgabe zugrunde, ein Linearkugellager bereitzustellen, welches kostengünstig herstellbar ist, eine ausreichende Tragfähigkeit aufweist und welches Fluchtungsfehler der gegeneinander bewegten Bauteile ausreichend ausgleichen kann. Des Weiteren soll ein kostengünstig herstellbares Tragbahnelement bereitgestellt werden und ein Verfahren zur Herstellung des Tragbahnelementes sowie ein geeignetes Werkzeug zur Umformung eines Rohlings des Tragbahnelementes.

Diese Aufgabe wird mit den Merkmalen der unabhängigen Ansprüche 1, 3, 9 und 10 gelöst. Die jeweils zugeordneten Unteransprüche beschreiben Weiterbildungen oder Ausgestaltungen der Erfindung.

### Zusammenfassung der Erfindung

Der Erfindung liegt die Erkenntnis zugrunde, dass die Außenfläche der Tragbahnelemente ohne nennenswerte Einbußen an deren Tragfähigkeit reduziert werden kann, um damit Vereinfachungen bzw. Kostenvorteile bei der Herstellung erzielt werden können.

Die Erfindung geht daher zunächst aus von einem Linearkugellager zur längsverschieblichen Lagerung einer wellenförmige Führungsschiene in einem die Führungsschiene umgebenden Teil, mit einem hülsenartigen Käfig, welcher in Umfangsrichtung hintereinander angeordnete Ausnehmungen aufweist, in denen Kugelumläufe gehalten sind, wobei jeder Kugelumlauf wenigstens einen Tragabschnitt mit an der Führungsschiene abrollbar abgestützten tragenden Kugeln aufweist, wobei die tragenden Kugeln eines Kugelumlaufs zusätzlich an einer Laufbahn eines in den Käfig mittel- oder unmittelbar eingesetzten Tragbahnelementes abrollbar abgestützt sind, welches wenigstens eine radiale, zumindest in einer Richtung nach außen gewölbte Außenfläche zur Anlage an eine Innenfläche des die Führungsschiene umgebenden Teils aufweist. Gemäß der Erfindung ist dabei vorgesehen, dass die wenigstens eine Außenfläche durch wenigstens einen stegartigen Vorsprung gebildet wird, der sich in Längsrichtung des Tragbahnelementes erstreckt.

Das Tragbahnelemente wird durch das Verfahren vom Anspruch 1 herstellt.

Dadurch ist es möglich, die erforderliche Balligkeit bzw. Wölbung der Außenfläche der Tragbahnelemente mit einem vereinfachten Herstellverfahren (Umformung) herzustellen, ohne dass es zu nennenswerten Einbußen der Tragfähigkeit des Tragbahnelementes kommt. Durch den stegartigen Vorsprung werden die umzuformende Fläche und somit auch die Umformkräfte reduziert. Insgesamt lässt sich somit ein mit derartigen Tragbahnelementen versehenes Linearkugellager wirtschaftlicher und damit kostengünstiger herstellen.

Gemäß einer ersten Weiterbildung der Erfindung ist vorgesehen, dass der stegartige Vorsprung im mittleren Bereich des Tragbahnelementes angeordnet ist, welcher sich axial vorzugsweise über die gesamt Länge des Tragbahnelementes erstreckt. Dies führt zu einer guten, gleichmäßigen Lastverteilung durch den stegartigen Vorsprung.

Es hat sich gezeigt, dass es zur Sicherstellung einer ausreichenden Lastverteilung bzw. Kraftübertragung zwischen dem Tragbahnelement und dem die Führungsschiene umgebenden Teil zweckmäßig ist, wenn der stegartige Vorsprung eine Breite aufweist, die weniger als 75 %, vorzugsweise 5% - 35% der Breite des Tragbahnelementes entspricht.

Wird die ballige Außenfläche des stegartigen Vorsprungs wie im erfindungsgemäßen Herstellverfahren spanlos durch Prägung erzeugt, so ist es sehr vorteilhaft, wenn entlang des stegartigen Vorsprungs wenigstens eine Freistellung, beispielsweise eine nutenartige Vertiefung, eingebracht oder ausgebildet ist. Idealerweise sollte vorgesehen sein, dass zu beiden Seiten des stegartigen Vorsprungs jeweils eine solche Freistellung oder nutenartige Vertiefung eingebracht bzw. ausgebildet ist. Durch diesen Aufbau kann das Prägen einer balligen Außenfläche sehr erleichtert werden, da die Freistellungen bzw. nutenartigen Vertiefungen einen Raum bilden, in den das durch den Prägevorgang verdrängte Material kontrolliert aufgenommen werden kann.

Weiterhin ist es zur Erhöhung der Tragfähigkeit des Tragbahnelementes zweckmäßig, dass entlang beider Seiten des stegartigen Vorsprungs weitere stegartige Vorsprünge vorgesehen sind, die durch Freistellungen oder nutenartige Vertiefungen voneinander beabstandet sind. Hierdurch ist trotzdem immer noch eine deutliche Reduzierung der notwendigen Umformkräfte möglich, wobei die Freistellungen oder nutenartigen Vertiefungen wiederum einen Raum zur Aufnahme des durch den Prägevorgang verdrängten Materials bilden.

Wenn gemäß einer weiteren zweckmäßigen Ausgestaltung der Erfindung vorgesehen ist, dass das Tragbahnelement in ein gehäuseartiges Aufnahmeteil eingesetzt ist, welches seinerseits in die Ausnehmung des Käfigs eingesetzt, vorzugsweise eingeclipst ist, ist eine leichte Montage sowie bei Bedarf eine leichte Austauschbarkeit der Tragbahnelemente möglich.

Die Erfindung geht ferner aus von einem Tragbahnelement zur Verwendung in einem Linearkugellager mit wenigstens einer zumindest in einer Richtung nach außen gewölbten Außenfläche und wenigstens einer der wenigstens einen gewölbten Außenfläche gegenüberliegenden Laufbahn zur wenigstens teilweise Aufnahme von tragenden Kugeln des Linearkugellagers. Erfindungsgemäß ist hierbei vorgesehen, dass die wenigstens eine gewölbte Außenfläche durch wenigstens einen stegartigen Vorsprung gebildet ist, der sich in Längsrichtung des Tragbahnelementes erstreckt.

Wie bereits weiter oben erwähnt, ist es durch diesen Aufbau möglich, die erforderliche Balligkeit bzw. Wölbung der Außenfläche der Tragbahnelemente mit einem vereinfachten Herstellverfahren (beispielsweise Umformung) herzustellen, ohne dass es zu nennenswerten Einbußen der Tragfähigkeit des Tragbahnelementes kommt.

Nach einer Weiterbildung der Erfindung ist der stegartige Vorsprung im mittleren Bereich der Breite des Tragbahnelementes angeordnet. Dabei kann der stegartige Vorsprung zweckmäßigerweise eine Breite aufweisen, die weniger als 75 %, vorzugsweise 5% - 35% der Breite des Tragbahnelementes entspricht.

Es ist dabei sehr vorteilhaft, wenn entlang des stegartigen Vorsprungs, also vorzugsweise parallel dazu, wenigstens eine Freistellung oder nutenartige Vertiefung eingebracht ist. Optimal ist es, wenn zu beiden Seiten des stegartigen Vorsprungs jeweils eine Freistellung oder nutenartige Vertiefung ausgebildet ist.

Weiterhin kann zur Erhöhung der Tragfähigkeit vorgesehen sein, dass entlang beider Seiten des stegartigen Vorsprungs weitere stegartige Vorsprünge vorgesehen sind, die durch Freistellung oder nutenartige Vertiefungen voneinander beabstandet sind.

Die Erfindung umfasst auch ein Verfahren zur Herstellung eines Tragbahnelementes mit folgenden Verfahrensschritten:
- Erzeugen eines Rohlings, vorzugsweise als gezogenes Profil, welches wenigstens einen stegartigen Vorsprung aufweist, der sich in Längsrichtung des Rohlings erstreckt,
- Prägen des wenigstens einen stegartigen Vorsprungs derart, dass der wenigstens eine stegartige Vorsprung zumindest in seiner Längsrichtung eine nach außen gewölbte Außenfläche erhält.

Dieses Herstellverfahren ist sehr kostengünstig mit reduzierten Umformkräften möglich. Durch diese mögliche Reduzierung der erforderlichen Prägekraft besteht keine Gefahr, dass die Rückseite des Tragbahnelementes, in welcher die Laufbahnen für die tragenden Kugeln eingebracht sind, auch verformt wird, was zu einer Unbrauchbarkeit bzw. erforderlichen Nacharbeit des Tragbahnelementes führen würde.

Um die Umformkräfte so weit wie möglich reduzieren zu können ist es zweckmäßig, wenn die Prägekraft lediglich auf einen im mittleren Bereich des Rohlings (wieder bezüglich der Breite des Rohlings gesehen) angeordneten stegartigen Vorsprung aufgebracht wird.

Vorteilhaft kann zur Prägung des Rohlings eine Vorrichtung eingesetzt werden, die folgende Bauteile umfasst: Wenigstens eine Prägeform, welche die die Laufbahn für die tragenden Kugeln aufweisende Seite formschlüssig abstützt, wenigstens zwei Form-Seitenteile, wenigstens zwei Form-Stirnseitenteile und wenigstens einen Prägestempel, welcher an seiner dem Tragbahnelement-Rohling zugewandten Seite derart ausgebildet ist, dass die Prägekraft nur auf den wenigstens einen stegartigen Vorsprung des Tragbahnelement-Rohlings ausgeübt wird.

### Kurze Beschreibung der Zeichnungen

Die Erfindung wird im Folgenden anhand der beiliegenden Zeichnungen an bevorzugten Ausführungsbeispielen näher erläutert. Darin zeigt
- Fig. 1: eine perspektivische Darstellung eines erfindungsgemäßen Linearkugellagers,
- Fig. 2: ein Kugelumlaufgehäuse in perspektivische Darstellung mit eingesetztem erfindungsgemäßen Tragbahnelement,
- Fig. 3: eine erste Ausführungsvarinate eines erfindungsgemäßen Tragbahnelementes in perspektivische Darstellung,
- Fig. 4: eine Darstellung des Tragbahnelementes gemäß Ansicht IV der Fig. 3,
- Fig. 5: eine Seitenansicht des Tragbahnelementes gemäß Ansicht V der Fig. 4,
- Fig. 6: eine zweite Ausführungsform eines erfindungsgemäßen Tragbahnelementes in perspektivische Darstellung,
- Fig. 7: eine Darstellung des Tragbahnelementes gemäß Ansicht VII der Fig. 6,
- Fig. 8: eine Seitenansicht des Tragbahnelementes gemäß Ansicht VIII der Fig. 7,
- Fig. 9: eine stark vereinfachte Prinzipdarstellung einer erfindungsgemäßen Herstellvorrichtung,
- Fig. 10: eine perspektivische Darstellung des Rohlings der ersten Ausführungsform des erfindungsgemäßen Tragbahnelementes vor einer Umformung, und
- Fig. 11: eine perspektivische Darstellung des Rohlings der zweiten Ausführungsform des erfindungsgemäßen Tragbahnelementes vor einer Umformung.

### Detaillierte Beschreibung der Zeichnungen

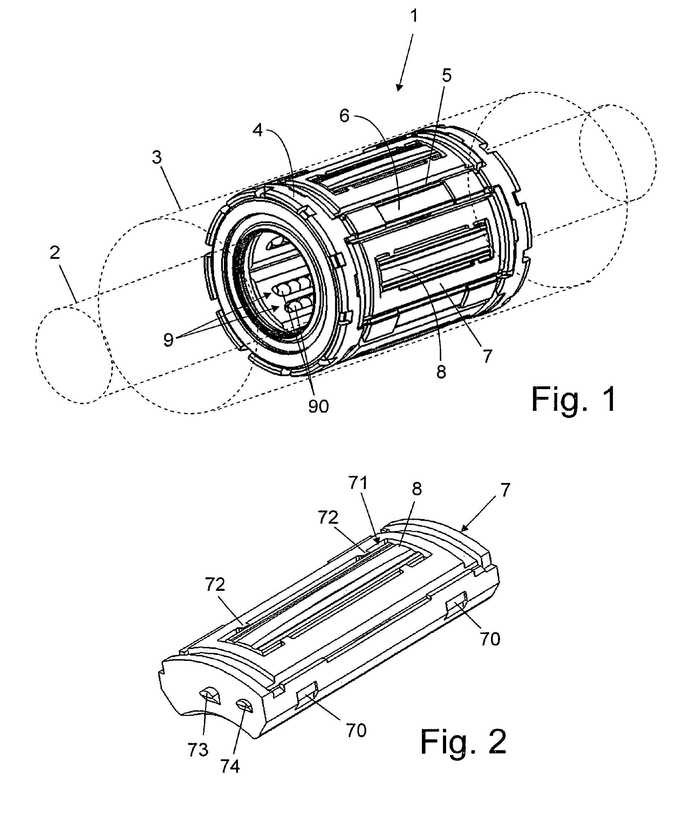

In Fig. 1 ist ein erfindungsgemäßes Linearkugellager 1 dargestellt. Das Linearkugellager 1 dient zur verschieblichen Lagerung einer Welle 2 in einer Gehäuse-Innenbohrung 3, welche (2, 3) nur prinziphaft durch gestrichelte Linien angedeutet sind. Das Linearkugellager 1 weist einen hülsenartigen Käfig 4 auf, der über seinen Umfang durch Verbindungsstege 6 beabstandete Ausnehmungen 5 aufweist. Die Ausnehmungen 5 weisen im Grundriss eine rechteckige Form auf und dienen zur lösbaren Aufnahme von Kugelumlaufgehäusen 7. Wie ersichtlich, ist der Käfig 4 in diesem Ausführungsbeispiel mit fünf Kugelumlaufgehäusen 7 bestückt, wobei jedes Kugelumlaufgehäuse 7 zwei Kugelumläufe 9 beinhaltet. Jeder Kugelumlauf 9 weist einen Tragabschnitt mit an der Welle 2 abrollbar abgestützten tragenden Kugeln 90 auf, ferner einen Rücklaufabschnitt mit nach dem Tragabschnitt rücklaufenden Kugeln (nicht erkennbar) und zwei diese Abschnitte miteinander verbindende Umlenkabschnitte (ebenfalls nicht ersichtlich), so dass endlose Umläufe gebildet sind.

Wie in Fig. 2 gezeigt, weist jedes Kugelumlaufgehäuse 7 eine im Grundriss in etwa rechteckige Form auf und ist in Querschnitt derart nach radial außen gewölbt, dass es sich passend in eine zugeordnete Ausnehmung 5 des Käfigs 4 einfügen lässt. Das Kugelumlaufgehäuse 7 ist dabei an seinen Längsseiten mit jeweils zwei Ausnehmungen 70 versehen, die beispielsweise rastend mit entsprechenden Rastelementen (nicht gezeigt) im Bereich der Ausnehmungen 5 des Käfigs 4 zusammenwirken können. Ferner sind an den Stirnseiten des Kugelumlaufgehäuses 7 Vorsprünge 73, 74 angebracht, die in entsprechende Öffnungen im Bereich der Stirnseiten der Ausnehmungen 5 hineinragen. Insgesamt ist jedes Kugelumlaufgehäuse 7 so derart in der Ausnehmung 5 eingesetzt und justiert, dass es geringfügige Kippbewegungen vollführen kann. Das Kugelumlaufgehäuse 7 ist ferner mit einer im Grundriss ebenfalls rechteckigen Ausnehmung 71 versehen, in die das Tragbahnelement 8 eingesetzt werden kann. Als Justierhilfen dienen hierbei an den Längsseiten der Ausnehmung 71 angebrachte Vorsprünge 72.

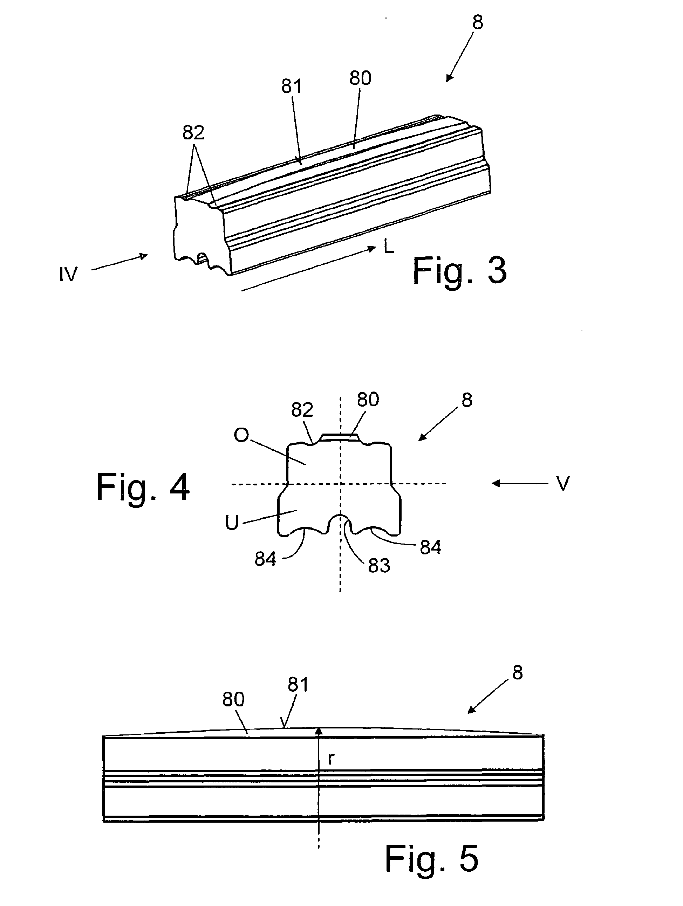

Nunmehr wird auf die Figuren 3 bis 5 Bezug genommen, in denen ein erstes Ausführungsbeispiel für ein Tragbahnelement 8 in mehreren Ansichten gezeigt ist. Das Tragbahnelement 8 weist die Form eines länglichen Klotzes mit einer Längserstreckung L auf. Auf der Oberseite des Tragbahnelementes 8, und zwar in dessen hinsichtlich der Breite mittleren Bereich, ist ein stegartiger Vorsprung 80 angeformt, welcher eine nach außen gewölbte Außenfläche 81 mit einem Radius r aufweist und sich über die gesamte Länge L des Tragbahnelementes 8 erstreckt. Es sei darauf hingewiesen, dass der stegartige Vorsprung 80 nicht unbedingt einstückig an die Oberseite des Tragbahnelementes 8 angeformt sein muss, sondern unter Umständen auch als Bauteil oder Schicht angebracht bzw. angefügt (gepunktet, geklebt, gelötet, etc.) sein kann.

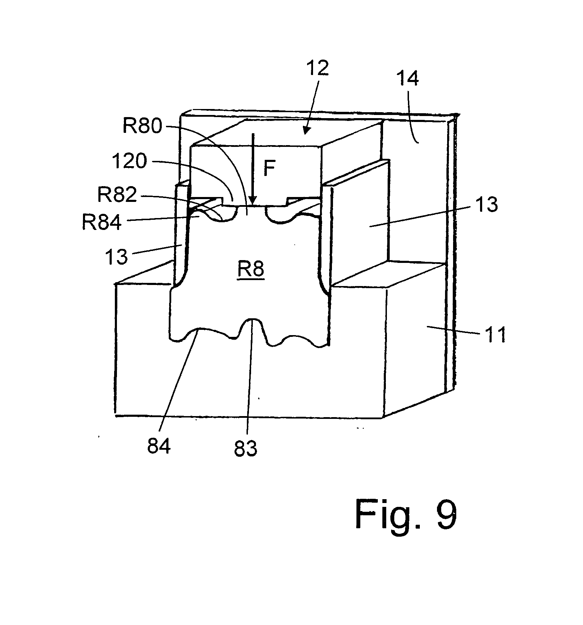

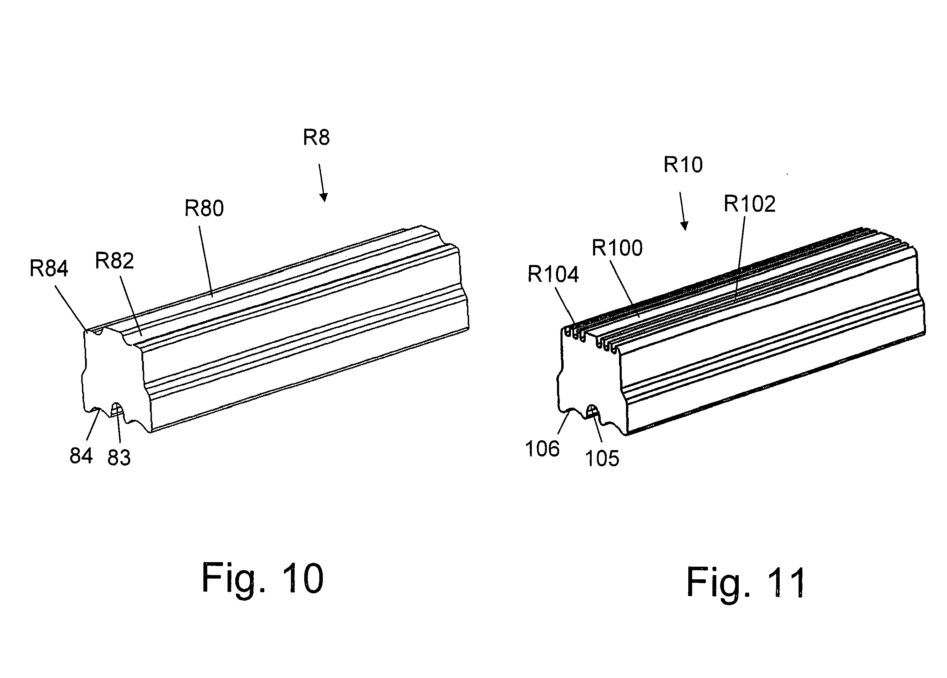

Beidseitig vom stegartigen Vorsprung 80 sind nutartige Vertiefungen 82 ausgebildet, welche sich ebenfalls über die gesamte Länge L des Tragbahnelementes 8 erstrecken und während eines vorangegangenen Prägevorgangs (vergleiche Fig. 9) aus Vertiefungen R82 eines geprägten Rohlings R8 (vgl. Fig. 10) hervorgegangen sind. Die Vertiefungen R82 bilden einen Raum, in den das beim Prägen des Rohlings R8 verdrängte Material kontrolliert aufgenommen werden kann. Insbesondere aus Fig. 3 ist ersichtlich, dass das Tragbahnelement 8 im Querschnitt eine obere Hälfte O und eine untere Hälfte U aufweist, wobei die untere Hälfte U eine größere Breite aufweist und an ihrer Unterseite mittig mit einer nutartigen Vertiefung 83 versehen ist, welche zwei Laufbahnen 84 für die tragenden Kugeln 90 voneinander beabstandet.

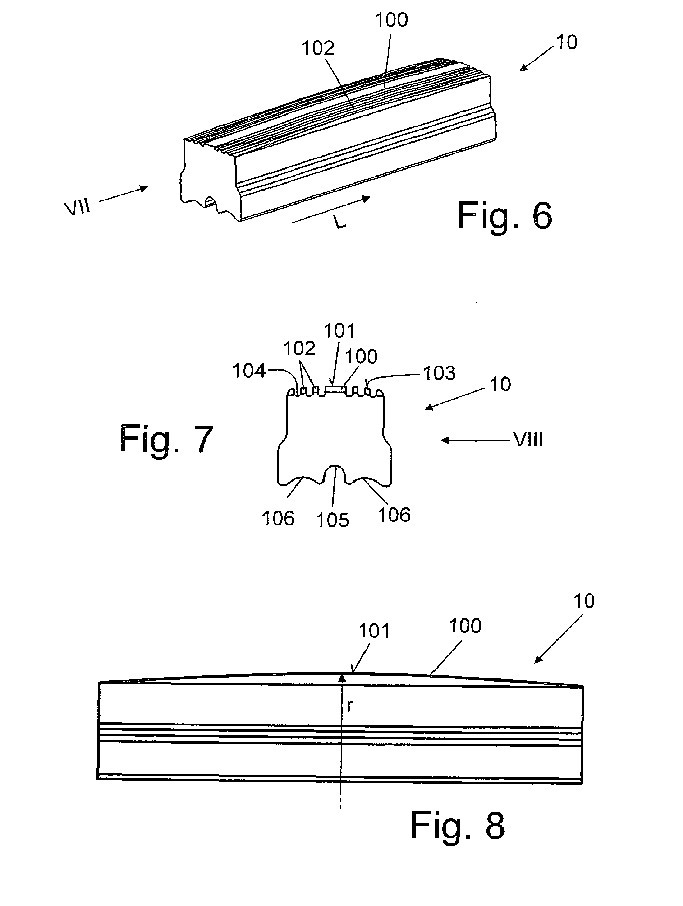

Bezug nehmend auf die Figuren 6 bis 8 wird ein zweites erfindungsgemäßes Tragbahnelement 10 beschrieben. Das Tragbahnelement 10 weist im Wesentlichen eine ähnliche Form auf wie das bereits beschriebene Tragbahnelement 8 auf. Im Unterschied dazu sind jedoch zu einem stegartigen Vorsprung 100, welcher sich auf der Oberseite des Tragbahnelementes 10 im hinsichtlich der Breite des Tragbahnelementes 10 mittleren Bereich befindet und sich ebenfalls über die gesamte Länge L des Tragbahnelementes 10 erstreckt, beidseitig des stegartigen Vorsprungs 100 weitere stegartige Vorsprünge 102 vorhanden, welche sich ebenfalls über die gesamte Länge L des Tragbahnelementes 10 erstrecken und durch nutartige Vertiefungen 104 voneinander beabstandet sind. Die stegartigen Vorsprünge 100 bzw. 102 weisen in Längserstreckung L nach außen gewölbte Außenflächen 101 bzw. 103 mit einem Radius r auf. An der Unterseite des Tragbahnelementes 10 sind wiederum zwei Laufbahnen 106 eingearbeitet, welche durch eine nutartige Vertiefung 105 voneinander beabstandet sind.

In Fig. 9 ist eine erfindungsgemäße Vorrichtung zum Prägen eines Tragbahnelement-Rohlings R8 (siehe Fig. 10) dargestellt. Die Vorrichtung umfasst eine Prägeform 11, in die der Tragbahnelement-Rohling R8 mit seiner Unterseite eingesetzt und formschlüssig abgestützt ist. Des Weiteren ist ein Prägestempel 12 vorhanden, welcher von oben auf einen stegartigen Vorsprung R80 des Tragbahnelement-Rohlings R8 eine Prägekraft F aufbringt. Da die seitlich neben dem stegartigen Vorsprung R80 vorhandenen Bereiche R84 etwas tiefer als dieser (R80) sind, ist es ohne weiteres möglich, dass nur der mittlere, den stegartigen Vorsprung R80 enthaltende Bereich des Rohlings R8 geprägt wird. Hierdurch kann die umzuformende Fläche und damit die aufzubringende Prägekraft F erheblich reduziert werden, wodurch die Gefahr, dass bei der Prägung auch die die Laufbahnen 84 enthaltene Unterseite des Tragbahnelement-Rohlings R8 verformt wird, gleichermaßen vermindert wird.

Alternativ oder zusätzlich kann der Prägestempel 12 mit einem Vorsprung 120 versehen sein, der in etwa der Breite des stegartigen Vorsprungs R80 entspricht bzw. zumindest geringfügig breiter als dieser ist. Des Weiteren weist der Prägestempel 12 eine nach innen gerichtete Wölbung auf (nicht sichtbar), die der Sollwölbung der Außenfläche 81 des herzustellenden Tragbahnelementes 8 entspricht und sich über die gesamte Länge des Rohlings erstreckt. Ferner sind zwei Form-Seitenteile 13 erkennbar, die dem Prägestempel 12 und dem Rohling R8 beim Prägen seitlichen Halt geben. Schließlich sind auch zwei Form-Stirnseitenteile 14 vorhanden. Von diesen Form-Stirnseitenteilen ist nur eines dargestellt, um den Sitz des Rohlings R8 in der Prägeform 11 besser erkennen zu können.

In den Figuren 10 und 11 sind schließlich die Rohlinge R8 bzw. R10 der Tragbahnelemente 8 bzw. 10 dargestellt. Mit dem Begriff "Rohling" werden Tragbahnelemente 8,10 vor dem Prägen der balligen Längsstege bezeichnet. Die Rohlinge R8 bzw. R10 sind auf Fertigmaß (Längenmaß) gezogene Profile mit an ihrer Oberseite entsprechend profilierten stegartigen Vorsprüngen R80 bzw. R100 und R102, deren Oberflächen jedoch noch geradlinig verlaufen. Zwischen dem stegartigen Vorsprung R80 und den seitlichen Bereichen R84 sind nutartige Vertiefungen R82 ausgebildet, die während des Prägevorgangs durch Materialfluss in die Vertiefungen 82 umgeformt werden. Gleichermaßen sind zwischen den stegartigen Vorsprüngen R100 und R102 nutartige Vertiefungen R104 ausgebildet. An ihrer Unterseite weisen die Rohlinge R8 bzw. R10 bereits die Laufbahnen 84 bzw. 106 und die dazwischen liegende, nutartige Vertiefung 83 bzw. 105 in Fertigmaß auf. Zur Herstellung der gewölbten Oberfläche auf den stegartigen Vorsprüngen R80 bzw. R100 und R102 werden die Rohlinge in die Prägevorrichtungen eingebracht (hinsichtlich R80 vgl. Fig. 9).

### Bezugszeichenliste

- 1: Linearkugellager
- 2: Welle
- 3: Gehäuse-Innenbohrung
- 4: Hülsenartiger Käfig
- 5: Ausnehmungen
- 6: Verbindungsstege
- 7: Kugelumlaufgehäuse
- 70: Ausnehmungen
- 71: Ausnehmung
- 72: Vorsprünge
- 73: Vorsprünge
- 74: Vorsprünge
- 8: Tragbahnelement
- 80: Stegartiger Vorsprung des Tragbahnelementes
- 81: Nach außen gewölbte Außenfläche des stegartigen Vorsprungs
- 82: Nutenartige Vertiefungen
- 83: Nutenartige Vertiefung
- 84: Laufbahn
- 9: Kugelumlauf
- 90: Tragende Kugeln eines Kugelumlaufs
- 10: Tragbahnelement
- 100: Stegartiger Vorsprung
- 101: Nach außen gewölbte Außenfläche des stegartigen Vorsprungs
- 102: Stegartige Vorsprünge
- 103: Nach außen gewölbte Außenfläche der stegartigen Vorsprünge
- 104: Nutenartige Vertiefungen
- 105: Nutenartige Vertiefung
- 106: Laufbahnen
- 11: Prägeform
- 12: Prägestempel
- 120: Vorsprung des Prägestempel
- 13: Form-Seitenteile
- 14: Form-Stirnseitenteile
- F: Prägekraft
- L: Längserstreckung des Tragbahnelementes
- O: Obere Hälfte des Tragbahnelementes
- U: Untere Hälfte des Tragbahnelementes
- R8: Rohling des Tragbahnelementes
- R80: Stegartiger Vorsprung des Rohlings
- R82: Nutenartige Vertiefungen des Rohlings
- R84: Seitlich neben dem stegartigen Vorsprung R80 vorhandene Bereiche
- R10: Rohling des Tragbahnelementes
- R100: Stegartiger Vorsprung des Rohlings
- R102: Stegartige Vorsprünge des Rohlings
- r: Radius der gewölbten Oberflächen des Tragelements
- S: Symmetrielinie des Tragbahnelementes

## Patentansprüche

1. Verfahren zur Herstellung eines Tragbahnelementes (8,10) eines Linearkugellagers mit wenigstens einer zumindest in einer Richtung (L) nach außen gewölbten Außenfläche (81; 101,103) und wenigstens einer der wenigstens einen gewölbten Außenfläche (81; 101,103) gegenüber liegenden Laufbahn (84, 106) zur wenigstens teilweise Aufnahme von tragenden Kugeln (90) des Linearkugellagers (1), wobei die wenigstens eine gewölbte Außenfläche (81; 101,103) durch wenigstens einen stegartigen Vorsprung (80; 100, 102) gebildet ist, der sich in Längsrichtung (L) des Tragbahnelementes (8,10) erstreckt, **gekennzeichnet durch** folgende Verfahrensschritte:
- Erzeugen eines Rohlings (R8, R10), vorzugsweise als gezogenes Profil, welches wenigstens einen stegartigen Vorsprung (R80; R100, R102) aufweist, der sich in Längsrichtung (L) des Rohlings (R8, R10) erstreckt.
- Prägen des wenigstens einen stegartigen Vorsprungs (R80; R100, R102) derart, dass der wenigstens eine stegartige Vorsprung (R80; R100, R102) zumindest in seiner Längsrichtung (L) eine nach außen gewölbte Außenfläche (81; 101, 103) erhält.

2. Verfahren zur Herstellung eines Tragbahnelementes (8) nach Anspruch 1, **dadurch gekennzeichnet, dass** die Prägekraft (F) lediglich auf einen im mittleren Bereich des Rohlings (R8) angeordneten stegartigen Vorsprung (R80) aufgebracht wird.

3. Tragbahnelement (8), hergestellt nach Anspruch 1 oder 2.

4. Tragbahnelement (8) nach Anspruch 3, **dadurch gekennzeichnet, dass** der stegartige Vorsprung (80) im mittleren Bereich des Tragbahnelementes (8) angeordnet ist.

5. Tragbahnelement (8) nach Anspruch 3 bis 4, **dadurch gekennzeichnet, dass** entlang des stegartigen Vorsprungs (80) wenigstens eine Freistellung oder eine nutenartige Vertiefung (82) vorgesehen ist.

6. Tragbahnelement (8) nach einem der Ansprüche 3 bis 5, **dadurch gekennzeichnet, dass** zu beiden Seiten des stegartigen Vorsprungs (80) jeweils eine Freistellung oder eine nutenartige Vertiefung (82) vorgesehen ist.

7. Tragbahnelement (8) nach einem der Ansprüche 3 bis 6, **dadurch gekennzeichnet, dass** der stegartige Vorsprung (80) eine Breite aufweist, die weniger als 75 %, vorzugsweise 5% - 35% der Breite des Tragbahnelementes (8) aufweist.

8. Tragbahnelement (10) nach einem der Ansprüche 3 bis 7, **dadurch gekennzeichnet, dass** entlang beider Seiten des stegartigen Vorsprungs (100) weitere stegartige Vorsprünge (102) vorgesehen sind, die durch Freistellungen oder nutenartige Vertiefungen (104) voneinander beabstandet sind.

9. Vorrichtung zur Umformung eines Rohlings (R8) eines Tragbahnelementes (8) nach dem Verfahren gemäß Anspruch 1 oder 2, umfassend wenigstens eine Prägeform (11), welche die die Laufbahn (84) für die tragenden Kugeln (90) aufweisende Seite formschlüssig abstützt, wenigstens zwei Form-Seitenteile (13), wenigstens zwei Form-Stirnseitenteile (14) und wenigstens einen Prägestempel (12), welcher (12) an seiner dem Tragbahnelement-Rohling (R8) zugewandten Seite derart ausgebildet ist, dass die Prägekraft (F) nur auf den wenigstens einen stegartigen Vorsprung (R80) des Tragbahnelement-Rohlings (R8) ausgeübt wird.

10. Linearkugellager (1) zur längsverschieblichen Lagerung einer wellenförmigen Führungsschiene (2) in einem die Führungsschiene (2) umgebenden Teil (3), mit einem hülsenartigen Käfig (4), welcher in Umfangsrichtung hintereinander angeordnete Ausnehmungen (5) aufweist, in denen Kugelumläufe (9) gehalten sind, wobei jeder Kugelumlauf (9) wenigstens einen Tragabschnitt mit an der Führungsschiene (2) abrollbar abgestützten tragenden Kugeln (90) aufweist, wobei die tragenden Kugeln (90) eines Kugelumlaufs (9) zusätzlich an einer Laufbahn (84, 106) eines in den Käfig (4) mittel- oder unmittelbar eingesetzten, gemäß Anspruch 1 hergestellten Tragbahnelementes (8, 10) abrollbar abgestützt sind, welches (8, 10) wenigstens eine radiale, zumindest in einer Richtung (L) nach außen gewölbte Außenfläche (81; 101, 103) zur Anlage an eine Innenfläche des die Führungsschiene (2) umgebenden Teils (3) aufweist, wobei die wenigstens eine Außenfläche (81; 101, 103) durch wenigstens einen stegartigen Vorsprung (80; 100, 102) gebildet wird, der sich in Längsrichtung (L) des Tragbahnelementes (8, 10) erstreckt.

11. Linearkugellager (1) nach Anspruch 10, **dadurch gekennzeichnet, dass** der stegartige Vorsprung (80) im mittleren Bereich des Tragbahnelementes (8) angeordnet ist.

12. Linearkugellager (1) nach Anspruch 10 oder 11, **dadurch gekennzeichnet, dass** der stegartige Vorsprung (80) eine Breite aufweist, die weniger als 75 %, vorzugsweise 5% bis 35% der Breite des Tragbahnelementes (8) aufweist.

13. Linearkugellager (1) nach einem der Ansprüche 10 bis 12, **dadurch gekennzeichnet, dass** entlang des stegartigen Vorsprungs (80) wenigstens eine Freistellung oder eine nutenartige Vertiefung (82) ausgebildet ist.

14. Linearkugellager (1) nach einem der Ansprüche 10 bis 12, **dadurch gekennzeichnet, dass** zu beiden Seiten des stegartigen Vorsprungs (80) jeweils eine Freistellung oder eine nutenartige Vertiefung (82) eingebracht ist.

15. Linearkugellager (1) nach Anspruch 14, **dadurch gekennzeichnet, dass** entlang beider Seiten des stegartigen Vorsprungs (100) weitere stegartige Vorsprünge (102) vorgesehen sind, die durch Freistellungen oder nutenartige Vertiefungen (104) voneinander beabstandet sind.

16. Linearkugellager (1) nach einem der Ansprüche 10 bis 15, **dadurch gekennzeichnet, dass** das Tragbahnelement (8, 10) in ein gehäuseartiges Aufnahmeteil (7) eingesetzt ist, welches (7) seinerseits in die Ausnehmung (5) des Käfigs (4) eingesetzt ist.

## Claims

1. Method for producing a load-bearing raceway element (8, 10) of a linear ball bearing having at least one outer face (81; 101, 103) which is curved to the outside at least in one direction (L) and at least one raceway (84, 106) which lies opposite the at least one curved outer face (81; 101, 103) for at least partially receiving load-bearing balls (90) of the linear ball bearing (1), the at least one curved outer face (81; 101, 103) being formed by at least one web-like projection (80; 100, 102) which extends in the longitudinal direction (L) of the load-bearing raceway element (8, 10), **characterized by** the following method steps:
- production of a blank (R8, R10), preferably as a drawn profile, which has at least one web-like projection (R80; R100, R102) which extends in the longitudinal direction (L) of the blank (R8, R10);
- stamping of the at least one web-like projection (R80; R100, R102) in such a way that the at least one web-like projection (R80: R100, R102) is given an outwardly curved outer face (81; 101, 103) at least in its longitudinal direction (L).

2. Method for producing a load-bearing raceway element (8) according to Claim 1, **characterized in that** the stamping force (F) is applied merely to a web-like projection (R80) which is arranged in the central region of the blank (R8).

3. Load-bearing raceway element (8), produced according to Claim 1 or 2.

4. Load-bearing raceway element (8) according to Claim 3, **characterized in that** the web-like projection (80) is arranged in the central region of the load-bearing raceway element (8).

5. Load-bearing raceway element (8) according to either of Claims 3 and 4, **characterized in that** at least one clearance or one groove-like depression (82) is provided along the web-like projection (80).

6. Load-bearing raceway element (8) according to one of Claims 3 to 5, **characterized in that** in each case one clearance or one groove-like depression (82) is provided on both sides of the web-like projection (80).

7. Load-bearing raceway element (8) according to one of Claims 3 to 6, **characterized in that** the web-like projection (80) has a width which is less than 75%, preferably from 5% to 35% of the width of the load-bearing raceway element (8).

8. Load-bearing raceway element (10) according to one of Claims 3 to 7, **characterized in that** further web-like projections (102) are provided along both sides of the web-like projection (100), which web-like projections (102) are spaced apart from one another by clearances or groove-like depressions (104).

9. Apparatus for forming a blank (R8) of a load-bearing raceway element (8) in accordance with the method according to Claim 1 or 2, comprising at least one forming die (11) which positively supports the side which has the raceway (84) for the load-bearing balls (90), at least two side forming parts (13), at least two end-side forming parts (14) and at least one forming punch (12) which is configured on its side which faces the load-bearing raceway element blank (R8) in such a way that the stamping force (F) is exerted only on the at least one web-like projection (R80) of the load-bearing raceway element blank (R8).

10. Linear ball bearing (1) for the longitudinal displaceable mounting of a shaft-shaped guide rail (2) in a part (3) which surrounds the guide rail (2), having a sleeve-like cage (4) which has recesses (5) which are arranged behind one another in the circumferential direction and in which ball bearing circulation means (9) are held, each ball bearing circulation means (9) having at least one load-bearing section with load-bearing balls (90) which are supported on the guide rail (2) such that they can roll, the load-bearing balls (90) of a ball bearing circulating means (9) being supported additionally, such that they can roll, on a raceway (84, 106) of a load-bearing raceway element (8, 10) which is produced according to Claim 1, is inserted indirectly or directly into the cage (4), and has at least one radial outer face (81; 101, 103) which is curved to the outside at least in one direction (L) for bearing against an inner face of the part (3) which surrounds the guide rail (2), the at least one outer face (81; 101, 103) being formed by at least one web-like projection (80; 100, 102) which extends in the longitudinal direction (L) of the load-bearing raceway element (8, 10).

11. Linear ball bearing (1) according to Claim 10, **characterized in that** the web-like projection (80) is arranged in the central region of the load-bearing raceway element (8).

12. Linear ball bearing (1) according to Claim 10 or 11, **characterized in that** the web-like projection (80) has a width which is less than 75%, preferably from 5% to 35% of the width of the load-bearing raceway element (8).

13. Linear ball bearing (1) according to one of Claims 10 to 12, **characterized in that** at least one clearance or one groove-like depression (82) is formed along the web-like projection (80).

14. Linear ball bearing (1) according to one of Claims 10 to 12, **characterized in that** in each case one clearance or one groove-like depression (82) is made on both sides of the web-like projection (80).

15. Linear ball bearing (1) according to Claim 14, **characterized in that** further web-like projections (102) are provided along both sides of the web-like projection (100), which web-like projections (102) are spaced apart from one another by clearances or groove-like depressions (104).

16. Linear ball bearing (1) according to one of Claims 10 to 15, **characterized in that** the load-bearing raceway element (8, 10) is inserted into a housing-like receiving part (7) which for its part is inserted into the recess (5) of the cage (4).

## Revendications

1. Procédé de fabrication d'un élément de piste de support (8, 10) d'un roulement à billes linéaire comprenant au moins une surface extérieure (81 ; 101, 103) cintrée vers l'extérieur au moins dans une direction (L) et au moins une piste de roulement (84, 106) opposée à l'au moins une surface extérieure cintrée (81 ; 101, 103) pour recevoir au moins en partie des billes de support (90) du roulement à billes linéaire (1), l'au moins une surface extérieure cintrée (81 ; 101, 103) étant formée par au moins une saillie de type nervure (80 ; 100, 102) qui s'étend dans la direction longitudinale (L) de l'élément de piste de support (8, 10),
**caractérise par** les étapes de procédé suivantes :
- production d'une ébauche (R8, R10), de préférence sous forme de profilé embouti, qui présente au moins une saillie de type nervure (R80 ; R100, R102) qui s'étend dans la direction longitudinale (L) de l'ébauche (R8, R10) ;
- gaufrage de l'au moins une saillie de type nervure (R80 ; R100, R102) de telle sorte que l'au moins une saillie de type nervure (R80 ; R100, R102) acquière, au moins dans sa direction longitudinale (L), une surface extérieure cintrée vers l'extérieur (81 ; 101, 103).

2. Procédé de fabrication d'un élément de piste de support (8) selon la revendication 1, **caractérisé en ce que** la force de gaufrage (F) est uniquement appliquée sur une saillie de type nervure (R80) disposée dans la région centrale de l'ébauche (RB).

3. Elément de piste de support (8), fabriqué selon la revendication 1 ou 2.

4. Elément de piste de support (8) selon la revendication 3, **caractérisé en ce que** la saillie de type nervure (80) est disposée dans la région centrale de l'élément de piste de support (8).

5. Elément de piste de support (8) selon la revendication 3 ou 4, **caractérisé en ce qu'**au moins une partie vide ou un renfoncement de type rainure (82) est prévu(e) le long de la saillie de type nervure (80).

6. Elément de piste de support (8) selon l'une quelconque des revendications 3 à 5, **caractérisé en ce que** des deux côtés de la saillie de type nervure (80) est à chaque fois prévu(e) une partie vide ou un renfoncement de type rainure (82).

7. Elément de piste de support (8) selon l'une quelconque des revendications 3 à 6, **caractérisé en ce que** la saillie de type nervure (80) présente une largeur qui vaut moins de 75%, de préférence de 5% à 35%, de la largeur de l'élément de piste de support (8).

8. Elément de piste de support (10) selon l'une quelconque des revendications 3 à 7, **caractérisé en ce que** le long des deux côtés de la saillie de type nervure (100) sont prévues d'autres saillies de type nervure (102), qui sont espacées les unes des autres par des parties vides ou des renfoncements de type rainure (104).

9. Dispositif de façonnage d'une ébauche (R8) d'un élément de piste de support (8) selon le procédé des revendications 1 ou 2, comprenant au moins un moule de gaufrage (11) qui supporte par engagement par correspondance de forme le côté présentant la piste de roulement (84) pour les billes de support (90), au moins deux parties latérales de moule (13), au moins deux parties frontales de moule (14) et au moins un poinçon de gaufrage (12), lequel (12) est réalisé sur son côté tourné vers l'ébauche d'élément de piste de support (R8) de telle sorte que la force de gaufrage (F) ne s'exerce que sur l'au moins une saillie de type nervure (R80) de l'ébauche d'élément de piste de support (R8).

10. Roulement à billes linéaire (1) pour le support sur palier déplaçable longitudinalement d'un rail de guidage (2) en forme d'arbre dans une partie (3) entourant le rail de guidage (2), comprenant une cage de type douille (4) qui présente des évidements (5) disposés les uns derrière les autres dans la direction périphérique, dans lesquels évidements sont retenus des circuits de billes (9), chaque circuit de billes (9) présentant au moins une portion de support avec des billes (90) de support supportées de manière à pouvoir rouler sur le rail de guidage (2), les billes de support (90) d'un circuit de billes (9) étant supportées en outre de manière à pouvoir rouler sur une piste de roulement (84, 106) d'un élément de piste de support (8, 10) fabriqué selon la revendication 1, inséré directement ou indirectement dans la cage (4), lequel élément de piste de support (8, 10) présente au moins une surface extérieure radiale (81 ; 101, 103), cintrée vers l'extérieur au moins dans une direction (L), pour l'application contre une surface interne de la partie (3) entourant le rail de guidage (2), l'au moins une surface extérieure (81 ; 101, 103) étant formée par au moins une saillie (80 ; 100, 102) en forme de nervure, qui s'étend dans la direction longitudinale (L) de l'élément de piste de support (8, 10).

11. Roulement à billes linéaire (1) selon la revendication 10, **caractérisé en ce que** la saillie de type nervure (80) est disposée dans la région centrale de l'élément de piste de support (8).

12. Roulement à billes linéaire (1) selon la revendication 10 ou 11, **caractérisé en ce que** la saillie en forme de nervure (80) présente une largeur qui vaut moins de 75%, de préférence de 5% à 35%, de la largeur de l'élément de piste de support (8).

13. Roulement à billes linéaire (1) selon l'une quelconque des revendications 10 à 12, **caractérisé en ce que** le long de la saillie de type nervure (80) est prévu(e) au moins une partie vide ou un renfoncement de type rainure (82).

14. Roulement à billes linéaire (1) selon l'une quelconque des revendications 10 à 12, **caractérisé en ce que** des deux côtés de la saillie de type nervure (80) est à chaque fois prévu(e) une partie vide ou un renfoncement de type rainure (82).

15. Roulement à billes linéaire (1) selon la revendication 14, **caractérisé en ce que** le long des deux côtés de la saillie de type nervure (100) sont prévues d'autres saillies de type nervure (102), qui sont espacées les unes des autres par des parties vides ou des renfoncements de type rainure (104).

16. Roulement à billes linéaire (1) selon l'une quelconque des revendications 10 à 15, **caractérisé en ce que** l'élément de piste de support (8, 10) est inséré dans une partie de réception de type boîtier (7), laquelle (7) est insérée pour sa part dans l'évidement (5) de la cage (4).
